# EUROPÄISCHE PATENTSCHRIFT

(11) **EP 3 290 305 B1**
(45) Veröffentlichungstag und Bekanntmachung des Hinweises auf die Patenterteilung: **30.10.2024**
(21) Anmeldenummer: 17188975.1
(22) Anmeldetag: 01.09.2017
(51) Int. Cl.: B62D 53/00, B62D 53/06, B62D 53/08, B62D 59/04

(54) **STRASSENFAHRZEUG-ZUGKOMBINATION, INSBESONDERE ALS LANGE NUTZFAHRZEUG-KOMBINATION**
ROAD VEHICLE TRAIN COMBINATION, IN PARTICULAR AS LONG COMMERCIAL VEHICLE COMBINATION
COMBINAISON DE TRAIN ET DE VÉHICULE ROUTIÈRE, EN PARTICULIER EN TANT QUE COMBINAISON DE VÉHICULE UTILITAIRE LONG

(30) Priorität: 02.09.2016 DE 102016010574
(43) Veröffentlichungstag der Anmeldung: 07.03.2018
(73) Patentinhaber: MAN Truck & Bus SE, 80995 München (DE)
(72) Erfinder: Wagner, Philipp, 86316 Friedberg (DE); Fleischhakcer, Jan, 82140 Olching (DE); Kraaijenhagen, Ben, 82131 Stockdorf (DE); Kohrs, Christian, 73207 Plochingen (DE)
(74) Vertreter: Liebl, Thomas

(56) Entgegenhaltungen:
- EP-A1- 1 918 180
- EP-A2- 1 254 827
- WO-A1-03/000538
- WO-A1-03/099603
- WO-A1-2007/070988
- WO-A2-2008/086087
- CA-A1- 2 457 216
- DE-A1- 102006 030 347
- DE-U1- 202015 002 528
- FR-A1- 2 518 950
- US-A- 4 082 157

## Beschreibung

Die Erfindung betrifft die Verwendung einer Straßenfahrzeug-Zugkombination, insbesondere als lange Nutzfahrzeug-Kombination, in Logistikzentren zum individuellen Rangieren an Laderampen nach Anspruch 1.

Lange Nutzfahrzeug-Kombinationen sind unter anderem unter den Bezeichnungen Lang-LKWs und EuroCombis im Europäischen Raum und unter der Bezeichnung Roadtrains beispielsweise in den USA und Australien allgemein bekannt. Damit soll im Vergleich zu kürzeren Standard-Zugkombinationen eine Steigerung der Effizienz und Wirtschaftlichkeit des Straßengüterverkehrs gegebenenfalls zusammen mit einer Reduzierung von Fahrbahnbelastungen bei höherem Transportvolumen und Transportgewichten erreicht werden.

Solche langen, allgemein bekannten Nutzfahrzeug-Kombinationen weisen als erstes Fahrzeug eine steuerbare Zugmaschine mit einer oder mehreren, meist mittels einer Brennkraftmaschine angetriebenen Achsen auf. Daran schließen sich in einer Kombination wenigstens ein Auflieger und/oder wenigstens ein Dolly mit Auflieger und/oder wenigstens ein Anhänger als Transportanhänger an.

Als Zugmaschine wird eine Sattelzugmaschine (SZM) mit einer Sattelplatte als Teil einer allgemein bekannten Sattelkupplung verwendet, wenn sich an die Sattelzugmaschine ein Auflieger als Sattelauflieger, auch Trailer genannt mit einem Königszapfen anschließen soll. Für den Fall, dass ein Anhänger mit Deichsel oder ein Dolly an die Zugmaschine angehängt werden soll, kann als Zugmaschine ein Lastkraftwagen als LKW mit Aufbau und einer üblichen Anhängekupplung, insbesondere einer Klauenkupplung, verwendet werden.

Ein Dolly (englisch Rollwagen) ist als kurzer Anhänger mit einer Sattelplatte einer Sattelkupplung zur Ankopplung eines Aufliegers allgemein bekannt. Dollys sind insbesondere als Zwei-Achs-Dollys allgemein bekannt, bei denen eine Achse lenkbar ausgeführt ist. Dies kann insbesondere eine Vorderachse sein, die mittels einer Anhänge-Deichsel lenkbar ist.

Bei solchen langen Zugkombinationen ist der Antrieb über eine einzelne angetriebene Achse (Triebachse) der Zugmaschine meist nachteilhaft bzw. nicht möglich. Insbesondere können bei schweren Zugkombinationen, aber gleichzeitig mäßiger Achslast der Triebachse, neben erhöhtem Reifenverschleiß auch das frühzeitige Erreichen der Traktionsgrenze beobachtet werden. Aus diesem Grund kommen dann hier häufig 6x4 (sechs Räder bei vier angetriebenen Rädern) Zugmaschinen als Sattelzugmaschinen oder LKWs zum Einsatz. Beispielsweise kann bei einem acht-achsigen Lang-LKW mit 40t oder 44t Gesamtmasse (EuroCombi) die Achslast der Triebachsen bei gleichmäßiger Beladung verhältnismäßig niedrige Werte mit den vorstehend genannten Nachteilen annehmen.

Die EP 1 918 180 A1 beschreibt eine Fahrzeuganordnung, bestehend aus einem Zugfahrzeug und einem Anhänger, der einen Zusatzantrieb zur Verbesserung der Geländefähigkeit der Fahrzeuganordnung enthält.

Aus der CA 2 457 216 A1 ist eine Fahrzeuganordnung bekannt, bei der der Auflieger einen zuschaltbaren Elektromotor enthält.

Aufgabe der Erfindung ist es, die Verwendung einer Straßenfahrzeug-Zugkombination in Logistikzentren bei gesteigerter Energieeffizienz und verringertem Reifenverschleiß zu verbessern.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird die Verwendung einer Straßenfahrzeug-Zugkombination zum individuellen Rangieren an Laderampen vorgeschlagen, wobei die Straßenfahrzeug-Zugkombination, insbesondere als lange Nutzfahrzeug-Kombination, eine steuerbare Zugmaschine mit wenigstens einer angetriebenen Achse in Kombination mit wenigstens einem mit der Zugmaschine gekoppelten Fahrzeug, insbesondere in Kombination mit wenigstens einem Auflieger und/oder mit wenigstens einem einen Dolly mit Auflieger und/oder mit wenigstens einem einen Anhänger als Transportanhänger, aufweist. Erfindungsgemäß ist bei der, insbesondere durch einen Lang-LKW, Euro Combi oder Roadtrain gebildeten, Straßenfahrzeug-Zugkombination wenigstens eine Achse des mit dem Zugfahrzeug gekoppelten Fahrzeugs als Antriebsmodul und zeitweise Triebachse ausgebildet, wobei das Antriebsmodul eine Antriebseinheit aufweist, die mittels einer Steuereinheit in Abhängigkeit von dem ermittelten Fahrbetriebszustand und dem ermittelten Antriebsbedarf der Straßenfahrzeug-Zugkombination automatisch ansteuerbar und zeitlich begrenzt zuschaltbar ausgebildet ist.

Ein Antriebsbedarf zusätzlich zum Zugmaschinenantrieb kann sowohl als positiver Bedarf, zum Beispiel beim Anfahren zur Unterstützung des Zugmaschinenantriebs oder als negativer Bedarf, zum Beispiel beim Bremsen gegebenenfalls in Verbindung mit einer Rekuperation und einem Energiespeicher ermittelt werden. Die dafür zugrundeliegenden Fahrbetriebszustände können in der Zugmaschine erfasst und an das jeweilige Antriebsmodul weitergeleitet werden oder können direkt im Antriebsmodul mit einer dortigen Sensorik unabhängig oder zumindest teilweise unabhängig von der Zugmaschine erfasst werden. Entsprechend können Elemente der Steuereinheit insgesamt im Antriebsmodul oder bei entsprechend angepasster Zugmaschine auch ganz oder zumindest teilweise dort angeordnet sein. Bei nicht aktiviertem Antriebsmodul haben diese bedarfsweise zuschaltbaren Triebachsen die Funktion üblicher Laufachsen.

Es werden somit eine oder mehrere zusätzliche, bedarfsweise zuschaltbare Triebachsen getrennt vom Zugfahrzeug vorgeschlagen, so dass die Traktion bei festgestelltem Bedarf zeitweise und zusätzlich durch Aktivierung der zugeordneten Antriebsmodule auf diese weiteren Triebachsen verteilt werden kann, so dass dann die Fahrstabilität bei gleichzeitiger Reduzierung des Reifenverschleißes und einer Erhöhung der Traktionsgrenze verbessert wird. Vorteilhaft kann damit bedarfsweise der Antrieb der Zugmaschine insbesondere beim Anfahren und/oder in Steigungen oder beim Bremsen oder in ähnlichen Situationen unterstützt werden.

Dabei sollen das wenigstens eine linke und das wenigstens eine rechte Rad einer oder mehrerer zusätzlicher Triebachsen mittels des Antriebsmoduls und der Antriebseinheit unter Berücksichtigung betriebsbedingter Drehzahlunterschiede dieser Räder antreibbar sein.

Das Antriebsmodul mit seiner Antriebseinheit und Steuereinheit soll für seine Funktion mit der Zugmaschine zur Energieversorgung mit einer Versorgungsleitung und/oder zur Kommunikation, insbesondere zur Übermittlung von Status- und Steuerungsdaten, mit einer Datenleitung oder kabellos koppelbar sein.

Vorteilhaft kann das Antriebsmodul eine Energiespeichereinheit aufweisen, aus der die Antriebseinheit gesteuert, zusätzlich zu einer weiteren Energieversorgung, zumindest über einen begrenzten Zeitraum mit Energie versorgt werden kann.

Erfindungsgemäß wird ein Antriebsmodul, insbesondere ein Antriebsmodul eines Dollys, fahrbetriebsabhängig und bedarfsweise mit variierbarer Leistung bei einem Betriebszustand in Logistikzentren zum individuellen Rangieren an Laderampen, der durch Kommunikation mit der Zugmaschine und/oder durch eine Sensorik des Antriebsmoduls vorgegeben oder festgestellt wird, selbsttätig oder individuell von Hand zugeschaltet, wobei dann die Energieversorgung berührungslos mittels Ladeschleifen im Boden erfolgt. Zusätzlich ist das Antriebsmodul, insbesondere ein Antriebsmodul eines Dollys, fahrbetriebsabhängig und bedarfsweise mit variierbarer Leistung bei folgenden durch Kommunikation mit der Zugmaschine und/oder durch eine Sensorik des Antriebsmoduls vorgegebenen oder festgestellten Betriebszuständen selbsttätig oder individuell von Hand, insbesondere mittels einer Fernsteuerung, zuschaltbar:
a) im kompletten Zugbetrieb beim Beschleunigen und/oder in Steigungen und/oder beim Anfahren und/oder
b) als Boostfunktion zur kurzfristigen Überbrückung bzw. Ergänzung eines Zugmaschinen-Verbrennungsmotormoments und/oder
c) zur Steigerung der Bremswirkung im Gefälle, insbesondere in Verbindung mit einer Aufladung eines Energiespeichers durch Rekuperation, insbesondere bei einem elektrischen Energiespeicher.

In einer konkreten Ausführungsform besteht die lange Zugkombination aus einem Lastkraftwagen mit Anhängekupplung als Zugmaschine mit angehängtem, zweiachsigen Dolly und dort gekoppeltem Sattelauflieger (Lang-LKW Typ A-Train). Dabei ist die vordere Dollyachse lenkbar und die Lenkung mittels einer Deichsel betätigbar. Zudem ist die hintere Dollyachse (gegebenenfalls auch beide Dollyachsen) als Antriebsmodul und zeitweise Triebachse mit steuerbarer Antriebstechnik ausgebildet. Der Antrieb beider Dollyachsen ist jedoch aufwendig, insbesondere erhöht der Antrieb der vorderen Dollyachse in Zusammenspiel mit der Lenkung die Systemkomplexität und führt beim Vorwärtsfahren auch zu einer ungünstigen Entlastung einer solchen angetriebenen Vorderachse, so dass der Antrieb nur der hinteren Dollyachse zu bevorzugen ist.

In einer weiteren Ausgestaltung insbesondere für besonders lange Nutzfahrzeug-Kombinationen können auch Auflieger als Sattelauflieger mit heckseitigen Anhängekupplungen verwendet werden. Damit kann der Auflieger unter Zwischenschaltung eines Dollys mit einem weiteren Auflieger und/oder mit einem gekoppelt werden. Dabei soll wenigstens ein Auflieger und/oder wenigstens ein Dolly und/oder wenigstens ein Anhänger ein Antriebsmodul als zeitweise Triebachse zusätzlich zur Zugmaschine aufweisen.

Grundsätzlich kann als Antriebseinheit eines Antriebsmoduls - zusätzlich zu wenigstens einem Elektromotor - ein (kleiner) Verbrennungsmotor verwendet werden. Ein solches Konzept ist jedoch nur schwierig realisierbar und handhabbar, so dass vorzugsweise andere alternative Antriebskonzepte verwendet werden sollen:
Erfindungsgemäß wird in der Antriebseinheit eines Antriebsmoduls wenigstens ein Elektromotor verwendet, der direkt an der Triebachse, gegebenenfalls direkt an den angetriebenen Rädern, insbesondere in Form von Radnabenmotoren, angeordnet ist. Die Stromversorgung erfolgt erfindungsgemäß zusammen mit einer Signalkommunikation über eine Steckverbindung, insbesondere über eine Hochvoltsteckverbindung, von der Zugmaschine her. Besonders vorteilhaft kann hier im Antriebsmodul zudem ein elektrischer Energiespeicher als Akku zur Rekuperation bei Bremsvorgängen und zum Energiemanagement angeordnet sein.

Bei einer Ausstattung des Antriebsmoduls mit entsprechender Technik und Sensorik ist erfindungsgemäß auch eine ergänzende, erweitere Anwendung im Bereich von Logistikzentren möglich, insbesondere zum fahrerlosen Rangieren der Zugkombination oder Teilen der Zugkombination bei niedriger Geschwindigkeit an Laderampen oder ähnlichem. Die Energieversorgung erfolgt dann erfindungsgemäß über berührungslose Ladeschleifen im Boden des Logistikzentrums, wie dies beispielsweise bei Flurförderfahrzeugen aus der Produktionstechnik (fahrerlose Transportfahrzeuge, FTF) allgemein bekannt ist.

Alternativ kann zum Antrieb auch ein bedarfsgerecht zuschaltbarer Hydraulikmotor, gegebenenfalls in Verbindung mit einem Druckspeicher als kurzfristige Energiespeichereinheit mit einer Hydraulikverbindung zur Zugmaschine verwendet werden.

Auch eine Kombination aus Hydraulikmotor und elektrischer Maschine kann je nach den Gegebenheiten zweckmäßig sein, wobei dann die Energieversorgung hydraulisch, der Energiehaushalt im Antriebsmodul jedoch elektrisch organisierbar ist.

Als weitere Alternative kann der Antrieb mechanisch mittels einer koppelbaren Zapfwelle zur Zugmaschine in Form eines direkten mechanischen Durchtriebs ausgeführt werden. Alternativ kann ein solcher mechanischer Antrieb auch eine elektrische Maschine als Generator für eine flexible Energieverwendung antreiben.

In einer bevorzugten konkreten Ausgestaltung ist das Antriebsmodul als separate Baueinheit bzw. als Montageeinheit ausgebildet, um Montage des Antriebsmoduls bzw. des mit der Zugmaschine koppelbaren Fahrzeugs zu vereinfachen. Diese Baueinheit kann vorzugsweise lösbar an einem Fahrgestellrahmen des mit der Zugmaschine gekoppelten Fahrzeugs festgelegt werden, um die Flexibilität dieses Fahrzeugs zu erhöhen.

Das Antriebsmodul für ein mit einem Zugfahrzeug koppelbares Fahrzeug, insbesondere für einen Auflieger und/oder für einen Dolly mit Auflieger und/oder für einen Anhänger als Transportanhänger, ist erfindungsgemäß durch wenigstens eine Fahrzeugachse gebildet, wobei das Antriebsmodul eine Antriebseinheit zum Antreiben der Fahrzeugachsen-Räder aufweist. Erfindungsgemäß ist dabei vorgesehen, dass die Antriebseinheit mittels einer Steuereinheit des Antriebsmoduls in Abhängigkeit von dem mittels der Steuereinheit ermittelten Fahrbetriebszustand und dem mittels der Steuereinheit ermittelten Antriebsbedarf des Fahrzeugs automatisch ansteuerbar und zeitlich begrenzt aktivierbar ist.

Ferner wird ein Verfahren zum Betrieb einer Straßenfahrzeug-Zugkombination nach Anspruch 9 beansprucht.

Die sich durch die erfindungsgemäße Verfahrensführung ergebenden Vorteile sind identisch mit den bereits gewürdigten Vorteilen der erfindungsgemäßen Verwendung der Straßenfahrzeug-Zugkombination, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine lange Zugkombination aus einem LKW, einem Dolly und einem Auflieger mit insgesamt zwei möglichen Triebachsen;
- Figur 2: eine schematische Darstellung, aus der der Aufbau eines Antriebmoduls der Zug-kombination hervorgeht;
- Figur 3: eine lange Zugkombination entsprechend Figur 1 mit drei möglichen Triebachsen;
- Figur 4: eine lange Zugkombination aus einer Sattelzugmaschine, einem Auflieger mit zu-schaltbarer Triebachse und einem Anhänger; und
- Figur 5: eine lange Zugkombination aus einem LKW mit Aufbau, zwei Dollys und zwei Auf-liegern.

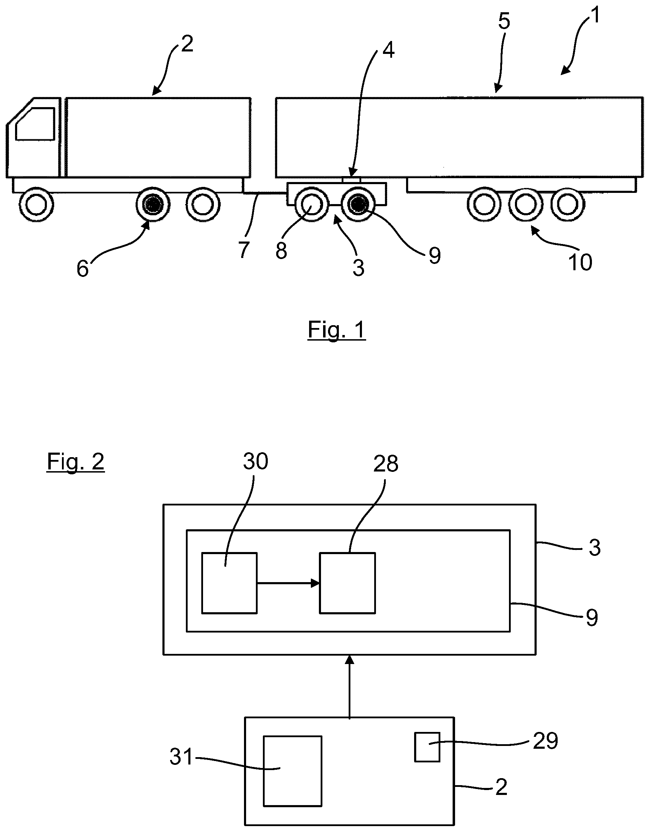

In Figur 1 ist beispielhaft eine erste lange Zugkombination 1 als Lang-LKW Typ A-Train dargestellt mit einem Lastkraftwagen 2 mit einem Aufbau, einem daran angehängten zweiachsigen Dolly 3 und einem daran mit einer Sattelkupplung 4 angekoppelten Auflieger (Trailer) 5.

In den Figuren 1 bis 4 sind jeweils alle Achsen als permanente und zuschaltbare Triebachsen durch schwarze Felgenflächen der jeweils linksseitig sichtbaren Rädern gekennzeichnet.

In der Zugkombination 1 hat der LKW 2 drei Achsen, wovon die zweite Achse als permanente Triebachse 6 ausgebildet ist. Der Dolly 3 ist ein zweiachsiger Dolly mit einer Deichsel 7 und damit gelenkter Vorderachse 8. Die Hinterachse 9 des Dollys 3 ist als Antriebsmodul bzw. als zuschaltbare Triebachse ausgeführt. Der Auflieger hat hier drei nicht antreibbare Achsen 10.

Wie in Fig. 2 gezeigt ist, weist die Hinterachse bzw. das Antriebsmodul 9 des Dollys 3 eine Antriebseinheit 28 auf, mittels der die Räder der Hinterachse 9 zeitweise angetrieben werden können. Die Antriebseinheit 28 ist durch einen Elektromotor gebildet, der mittels einer Steuereinheit 29 des LKWs 2 angesteuert werden kann. Hierzu ist der LKW 2, beispielsweise über eine Datenleitung, signaltechnisch mit dem Dolly 3 verbunden. In Abhängigkeit von dem mittels der Steuereinheit 29 ermittelten Fahrbetriebszustand der Zugkombination 1 und dem ebenfalls mittels der Steuereinheit 29 ermittelten Antriebsbedarf der Zugkombination 1 wird der Elektromotor 28 automatisch angesteuert und zeitlich begrenzt zugeschaltet bzw. aktiviert, so dass die Hinterachse 9 des Dollys 3 zeitweise von einem Laufachsenmodus in einen Triebachsenmodus geschaltet wird.

Gemäß Fig. 2 weist das Antriebsmodul 9 hier beispielhaft auch eine energieübertragend mit dem Elektromotor 28 verbundene elektrische Energiespeichereinheit 30 auf, mittels der Elektromotor 28 mit elektrischer Energie versorgt werden kann. Der Energiespeichereinheit 30 kann beispielsweise durch Rekuperation mit elektrischer Energie aufgeladen werden. Zudem weist hier beispielhaft auch der LKW 2 eine Energiespeichereinheit 31 auf, mittels der der Elektromotor 28 ebenfalls mit elektrischer Energie versorgt werden kann. Zur Ener-gieübertragung sind der LKW 2 und der Dolly 3 hier beispielhaft über eine Hochvoltverbindung energieübertragend miteinander verbunden.

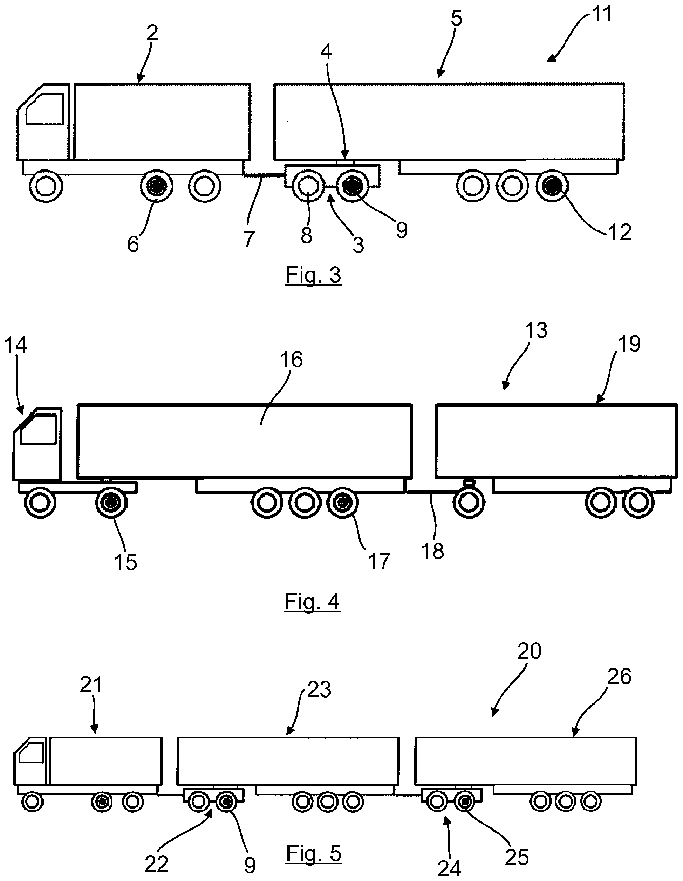

In Figur 3 ist weiter beispielhaft eine zweite lange Zugkombination 11 dargestellt, die weitgehend der ersten Zugkombination 1 entspricht, wobei gleiche Bauteile mit gleichen Bezugszeichen versehen sind. Die zweite Zugkombination 11 unterscheidet sich von der ersten Zugkombination 1 lediglich dadurch, dass auch die hintere Achse des Aufliegers 5 als zuschaltbare Triebachse 12 und somit als Antriebsmodul ausgebildet ist. Der Aufbau dieses Antriebsmoduls 12 kann dem Aufbau des in Fig. 2 gezeigten Antriebsmoduls 9 entsprechen.

In Figur 4 ist in einer weiteren beispielhaften Ausführungsform eine dritte lange Zugkombination 13 gezeigt mit einer zweiachsigen Sattelzugmaschine 14 als Zugmaschine mit einer hinteren permanenten Triebachse 15 und einem angekoppelten dreiachsigen Auflieger 16, dessen Hinterachse als zuschaltbare Triebachse 17 und somit als Antriebsmodul ausgebildet ist. ist. Der Aufbau dieses Antriebsmoduls 17 kann ebenfalls dem Aufbau des in Fig. 2 gezeigten Antriebsmoduls 9 entsprechen. Am Auflieger 16 schließt sich mit einer Deichsel 18 ein dreiachsiger Anhänger 19 an.

In Figur 5 ist beispielhaft eine besonders lange vierte Zugkombination 20 als Roadtrain dargestellt. Die ersten drei Fahrzeugelemente als LKW 21, Dolly 22 und Auflieger 23 entsprechen genau der ersten Zugkombination 1 aus Figur 1. Die vierte Zugkombination 20 ist hier noch ergänzt durch einen weiteren am Auflieger 23 angehängten Dolly 24 mit einer zuschaltbaren Triebachse 25 und einem weiteren Auflieger 26.

### Bezugszeichenliste

- 1: erste Zugkombination
- 2: Lastkraftwagen
- 3: Dolly
- 4: Sattelkupplung
- 5: Auflieger
- 6: Triebachse
- 7: Deichsel
- 8: Vorderachse (Dolly)
- 9: Hinterachse (Dolly)
- 10: Laufachsen
- 11: zweite Zugkombination
- 12: Triebachse
- 13: dritte Zugkombination
- 14: Sattelzugmaschine
- 15: Triebachse
- 16: Auflieger
- 17: Triebachse
- 18: Deichsel
- 19: Anhänger
- 20: vierte Zugkombination
- 21: LKW
- 22: Dolly
- 23: Auflieger
- 24: Dolly
- 25: Triebachse
- 26: Auflieger
- 28: Antriebseinheit
- 29: Steuereinheit
- 30: Energiespeichereinheit
- 31: Energiespeichereinheit

## Patentansprüche

1. Verwendung einer Straßenfahrzeug-Zugkombination in Logistikzentren zum individuellen Rangieren an Laderampen,
mit einer steuerbaren Zugmaschine (2; 14; 21) mit wenigstens einer angetriebenen Achse (6; 15) in Kombination mit wenigstens einem mit der Zugmaschine (2; 14; 21) gekoppelten Fahrzeug,
wobei wenigstens eine Achse (9; 12; 17; 25) des mit der Zugmaschine (2; 14; 21) gekoppelten Fahrzeugs als Antriebsmodul und zeitweise Triebachse ausgebildet ist, wobei das Antriebsmodul eine Antriebseinheit (28) aufweist, die mittels einer Steuereinheit (29) in Abhängigkeit von dem ermittelten Fahrbetriebszustand und dem ermittelten Antriebsbedarf der Straßenfahrzeug-Zugkombination (1) automatisch ansteuerbar und zeitlich begrenzt zuschaltbar ist,
wobei die Antriebseinheit (28) des Antriebsmoduls wenigstens einen Elektromotor (29) aufweist, der direkt an der Triebachse (9; 12; 17; 25) angeordnet ist und die Stromversorgung zusammen mit einer Signalkommunikation über eine Steckverbindung von der Zugmaschine (2; 14; 21) her erfolgt,
wobei das Antriebsmodul fahrbetriebsabhängig mit variierbarer Leistung, bei durch Kommunikation mit der Zugmaschine (2; 14; 21) und/oder durch eine Sensorik des Antriebsmoduls vorgegebenen oder festgestellten Betriebszustand in Logistikzentren zum individuellen Rangieren an Laderampen selbsttätig zuschaltbar ist oder individuell von Hand zuschaltbar ist, wobei dann die Energieversorgung berührungslos mittels Ladeschleifen im Boden erfolgt.

2. Verwendung einer Straßenfahrzeug-Zugkombination nach Anspruch 1, **dadurch gekennzeichnet, dass** mittels der Antriebseinheit (28) das wenigstens eine linke Rad und das wenigstens eine rechte Rad dieser wenigstens einen Triebachse (9; 12; 17; 25) unter Berücksichtigung betriebsbedingter Drehzahlunterschiede dieser Räder antreibbar sind.

3. Verwendung einer Straßenfahrzeug-Zugkombination nach Anspruch 1 oder 2, **dadurch gekennzeichnet, dass** das Antriebsmodul mit seiner Antriebseinheit und Steuereinheit (29) mit der Zugmaschine (2; 14; 21) zur Energieversorgung mit einer Versorgungsleitung und/oder zur Kommunikation, insbesondere zur Übermittlung und/oder Datenaustausch von Steuerungsdaten und Statusdaten, mit einer Datenleitung oder kabellos koppelbar ist.

4. Verwendung einer Straßenfahrzeug-Zugkombination nach einem der Ansprüche 1 bis 3, **dadurch gekennzeichnet, dass** das Antriebsmodul eine Energiespeichereinheit (30) aufweist, mittels der die Antriebseinheit (28) zusätzlich zu einer weiteren Energieversorgung zumindest über einen begrenzten Zeitraum mit Energie versorgbar ist.

5. Verwendung einer Straßenfahrzeug-Zugkombination nach einem der Ansprüche 1 bis 4, **dadurch gekennzeichnet, dass** das Antriebsmodul, insbesondere das Antriebsmodul eines Dollys (3; 22; 24), fahrbetriebsabhängig, insbesondere mit variierbarer Leistung, zusätzlich bei folgenden durch Kommunikation mit der Zugmaschine (2; 14; 21) und/oder durch eine Sensorik des Antriebsmoduls vorgegebenen oder festgestellten Betriebszuständen selbsttätig zuschaltbar ist oder individuell von Hand, insbesondere mittels einer Fernsteuerung, zuschaltbar ist:
a) im kompletten Zugbetrieb beim Beschleunigen und/oder in Steigungen und/oder beim Anfahren und/oder
b) als Boostfunktion zur kurzfristigen Überbrückung bzw. Ergänzung eines Zugmaschinen-Verbrennungsmotormoments und/oder
c) zur Steigerung der Bremswirkung im Gefälle, insbesondere in Verbindung mit einer Aufladung eines Energiespeichers (30) durch Rekuperation.

6. Verwendung einer Straßenfahrzeug-Zugkombination nach einem der Ansprüche 1 bis 5, **dadurch gekennzeichnet,**
**dass** die Zugkombination (1) aus einem Lastkraftwagen (2) mit Anhängekupplung als Zugmaschine mit angehängtem, zweiachsigen Dolly (3) und dort gekoppeltem SattelAuflieger (5) besteht (Lang-LKW Typ A-Train),
**dass** die vordere Dollyachse (8) lenkbar ist und die Lenkung mittels einer Deichsel (7) betätigbar ist, und
**dass** die hintere Dollyachse, gegebenenfalls auch beide Dollyachsen, als Antriebsmodul und zeitweise Triebachse (9) mit steuerbarer Antriebstechnik ausgebildet ist, wobei bevorzugt vorgesehen ist, dass zusätzlich noch wenigstens eine Aufliegerachse des Sattel-Aufliegers (5) als Antriebsmodul und zeitweise Triebachse (12) ausgeführt ist.

7. Verwendung einer Straßenfahrzeug-Zugkombination nach einem der Ansprüche 1 bis 6, **dadurch gekennzeichnet, dass** wenigstens ein Auflieger (16; 23) eine heckseitige Anhängekupplung aufweist, mittels der der Auflieger (23) unter Zwischenschaltung eines Dollys (24) mit einem weiteren Auflieger (26) und/oder mittels der der Auflieger (16) mit einem Anhänger (19) koppelbar ist, wobei der wenigstens eine Auflieger und/oder der wenigstens eine Dolly (22; 24) und/oder der wenigstens eine Anhänger (19) wenigstens ein Antriebsmodul mit einer zeitweisen Triebachse (9; 25) aufweist.

8. Verwendung einer Straßenfahrzeug-Zugkombination nach einem der Ansprüche 1 bis 7, **dadurch gekennzeichnet, dass** im Antriebsmodul ein elektrischer Energiespeicher (30) zur Rekuperation und zum Energiemanagement angeordnet ist.

9. Verfahren zum Betrieb einer Straßenfahrzeug-Zugkombination in Logistikzentren zum individuellen Rangieren an Laderampen, wobei die Straßenfahrzeug-Zugkombination eine steuerbare Zugmaschine (2; 14; 21) mit wenigstens einer angetriebenen Achse (6; 15) und wenigstens ein mit der Zugmaschine (2; 14; 21) gekoppeltes Fahrzeug aufweist, wobei wenigstens eine Achse (9; 12; 17; 25) des mit der Zugmaschine (2; 14; 21) gekoppelten Fahrzeugs als Antriebsmodul und zeitweise Triebachse ausgebildet ist, wobei das Antriebsmodul eine Antriebseinheit (28) aufweist, die mittels einer Steuereinheit (29) in Abhängigkeit von dem ermittelten Fahrbetriebszustand und dem ermittelten Antriebsbedarf der Straßenfahrzeug-Zugkombination (1) automatisch angesteuert und zeitlich begrenzt zugeschaltet wird, so dass die Achse zeitweise von einem Laufachsenbetrieb in einen Triebachsenbetrieb geschaltet wird,
wobei die Antriebseinheit (28) des Antriebsmoduls wenigstens einen Elektromotor (29) aufweist, der direkt an der Triebachse (9; 12; 17; 25) angeordnet ist und die Stromversorgung zusammen mit einer Signalkommunikation über eine Steckverbindung von der Zugmaschine (2; 14; 21) her erfolgt,
und wobei das Antriebsmodul fahrbetriebsabhängig mit variierbarer Leistung, bei durch Kommunikation mit der Zugmaschine (2; 14; 21) und/oder durch eine Sensorik des Antriebsmoduls vorgegebenen oder festgestellten Betriebszustand in Logistikzentren zum individuellen Rangieren an Laderampen selbsttätig zuschaltbar ist oder individuell von Hand zuschaltbar ist, wobei dann die Energieversorgung berührungslos mittels Ladeschleifen im Boden erfolgt.

## Claims

1. Use of a road vehicle tractor/trailer combination in logistics centres for individual manoeuvring to loading ramps,
with a controllable towing vehicle (2; 14; 21) with at least one driven axle (6; 15) in combination with at least one vehicle coupled to the towing vehicle (2; 14; 21),
wherein at least one axle (9; 12; 17; 25) of the vehicle coupled to the towing vehicle (2; 14; 21) is implemented as a drive module and temporary drive axle,
wherein the drive module comprises a drive unit (28) that can be automatically actuated and activated for a limited time by means of a control unit (29) depending on the determined driving state and the determined drive demand of the road vehicle tractor/trailer combination (1),
wherein the drive unit (28) of the drive module comprises at least one electric motor (29) that is disposed directly on the drive axle (9; 12; 17; 25) and the power supply, together with a signal communication, is carried out via a plug connection from the towing vehicle (2; 14; 21),
wherein the drive module is able to be activated automatically or is able to be activated individually by hand in logistics centres for individual manoeuvring to loading ramps, depending on the driving mode, with variable power, under the operating condition which is predetermined or determined by communication with the towing vehicle (2; 14; 21) and/or by a sensor arrangement of the drive module, wherein the power supply is then carried out contactlessly by means of charging loops in the ground.

2. Use of a road vehicle tractor/trailer combination according to Claim 1, **characterized in that** the at least one left wheel and the at least one right wheel of the at least one drive axle (9; 12; 17; 25) can be driven by means of the drive unit (28) taking into account operational revolution rate differences of said wheels.

3. Use of a road vehicle tractor/trailer combination according to Claim 1 or 2, **characterized in that** the drive module with the drive unit and control unit (29) thereof can be coupled to the towing vehicle (2; 14; 21) with a supply line for power supply and/or with a data line or wirelessly for communications, in particular for transmitting and/or data exchange of control data and status data.

4. Use of a road vehicle tractor/trailer combination according to any one of Claims 1 to 3, **characterized in that** the drive module comprises an energy storage unit (30), by means of which the drive unit (28) can be supplied with energy in addition to a further power supply at least over a limited time period.

5. Use of a road vehicle tractor/trailer combination according to any one of Claims 1 to 4, **characterized in that** the drive module, in particular the drive module of a dolly (3; 22; 24), can be activated automatically or individually by hand, in particular by means of a remote controller, depending on the driving mode, in particular with variable power, in addition for the following operating conditions that are predetermined or determined with communications with the towing vehicle (2; 14; 21) and/or by a sensor arrangement of the drive module.
a) in the full tractor/trailer mode when accelerating and/or when driving up a gradient and/or when driving off and/or
b) as a boost function for temporarily bridging or increasing a towing vehicle's combustion engine torque and/or
c) to increase the braking effect on a downslope, in particular in connection with the charging of an energy storage device (30) by recovery.

6. Use of a road vehicle tractor/trailer combination according to any one of Claims 1 to 5, **characterized in that**
the tractor/trailer combination (1) consists of a heavy goods vehicle (2) with a trailer coupling as the towing vehicle with a towed two-axle dolly (3) and a coupled semitrailer (5) coupled thereto (long HGV type A train),
the front dolly axle (8) is steerable and the steering can be actuated by means of a tow bar (7), and
the rear dolly axle, possibly even both dolly axles, is implemented as a drive module and temporary drive axle (9) with controllable drive technology, wherein it is preferably provided that in addition at least one further trailer axle of the semitrailer (5) is implemented as a drive module and temporary drive axle (12).

7. Use of a road vehicle tractor/trailer combination according to any one of Claims 1 to 6, **characterized in that** at least one semitrailer (16; 23) comprises a rear trailer coupling, by means of which the semitrailer (23) can be coupled, with the interposition of a dolly (24), to a further semitrailer (26) and/or by means of the semitrailer (16) to a trailer (19), wherein the at least one trailer and/or the at least one dolly (22; 24) and/or the at least one trailer (19) comprises at least one drive module with a temporary drive axle (9; 25).

8. Use of a road vehicle tractor/trailer combination according to any one of Claims 1 to 7, **characterized in that** electrical energy storage (30) for recovery and for energy management is disposed in the drive module.

9. Method for operating a road vehicle tractor/trailer combination in logistics centres for individual manoeuvring to loading ramps, wherein the road vehicle tractor/trailer combination comprises a controllable towing vehicle (2; 14; 21) with at least one driven axle (6; 15) and at least one vehicle coupled to the towing vehicle (2; 14; 21), wherein at least one axle (9; 12; 17; 25) of the vehicle coupled to the towing vehicle (2; 14; 21) is implemented as a drive module and temporary drive axle, wherein the drive module comprises a drive unit (28) that is automatically actuated and turned on for a limited time by means of a control unit (29) depending on the determined driving state and the determined drive demand of the road vehicle tractor/trailer combination (1), so that the axle is temporarily switched from a wheel axle mode into a drive axle mode,
wherein the drive unit (28) of the drive module comprises at least one electric motor (29) that is disposed directly on the drive axle (9; 12; 17; 25) and the power supply, together with a signal communication, is carried out via a plug connection from the towing vehicle (2; 14; 21),
and wherein the drive module is able to be activated automatically or is able to be activated individually by hand in logistics centres for individual manoeuvring to loading ramps, depending on the driving mode, with variable power, under the operating condition which is predetermined or determined by communication with the towing vehicle (2; 14; 21) and/or by a sensor arrangement of the drive module, wherein the power supply is then carried out contactlessly by means of charging loops in the ground.

## Revendications

1. Utilisation d'un combiné de traction de véhicules routiers dans des centres logistiques pour effectuer des manoeuvres individuelles sur des rampes de chargement, ledit combiné comprenant
un tracteur commandable (2 ; 14 ; 21) équipé d'au moins un essieu mené (6 ; 15) en combinaison avec au moins un véhicule accouplé au tracteur (2 ; 14 ; 21),
au moins un essieu (9 ; 12 ; 17 ; 25) du véhicule accouplé au tracteur (2 ; 14 ; 21) étant conçu comme module d'entraînement et parfois comme un essieu moteur,
le module d'entraînement comportant une unité d'entraînement (28) qui peut être commandée automatiquement et activée pendant une durée limitée au moyen d'une unité de commande (29) en fonction de l'état de fonctionnement de roulement déterminé et des besoins d'entraînement déterminés du combiné de traction de véhicules routiers (1),
l'unité d'entraînement (28) du module d'entraînement comprenant au moins un moteur électrique (29) qui est disposé directement sur l'essieu moteur (9 ; 12 ; 17 ; 25) et l'alimentation électrique étant effectuée, conjointement avec une communication de signaux, par une liaison enfichable depuis le tracteur (2 ; 14 ; 21),
le module d'entraînement pouvant être activé automatiquement en fonction du fonctionnement de roulement à puissance variable, dans l'état de fonctionnement spécifié ou déterminé par communication avec le tracteur (2 ; 14 ; 21) et/ou par un système de capteurs du module d'entraînement, dans des centres logistiques afin d'effectuer des manoeuvres individuelles sur des rampes de chargement, ou pouvant être activé individuellement à la main, l'alimentation en énergie étant alors effectuée sans contact au moyen de boucles de charge situées dans le sol.

2. Utilisation d'un combiné de traction de véhicules routiers selon la revendication 1, **caractérisée en ce que** l'au moins une roue gauche et l'au moins une roue droite de cet au moins un essieu moteur (9 ; 12 ; 17 ; 25) peuvent être entraînées au moyen de l'unité d'entraînement (28) avec prise en compte de différences de vitesse de rotation, dues au fonctionnement, de ces roues.

3. Utilisation d'un combiné de traction de véhicules routiers selon la revendication 1 ou 2, **caractérisée en ce que** le module d'entraînement pourvu de son unité d'entraînement et de son unité de commande (29) peut être relié au tracteur (2 ; 14 ; 21) par une ligne d'alimentation afin d'effectuer l'alimentation en énergie et/ou par une ligne de données ou sans fil afin d'effectuer la communication, en particulier la transmission et/ou l'échange de données de commande et de données d'état.

4. Utilisation d'un combiné de traction de véhicules routiers selon l'une des revendications 1 à 3, **caractérisée en ce que** le module d'entraînement comporte une unité de stockage d'énergie (30), au moyen de laquelle l'unité d'entraînement (28) peut être alimentée en énergie au moins pendant une durée limitée en plus d'une autre alimentation en énergie.

5. Utilisation d'un combiné de traction de véhicules routiers selon l'une des revendications 1 à 4, **caractérisée en ce que** le module d'entraînement, notamment le module d'entraînement d'un chariot (3 ; 22 ; 24), peut être activé automatiquement ou peut être activé individuellement à la main, notamment au moyen d'une télécommande, en fonction du fonctionnement de roulement, notamment à puissance variable, en plus dans les situations suivantes, par communication avec le tracteur (2 ; 14 ; 21) et/ou d'états de fonctionnement spécifiés ou déterminés par un système de capteurs du module d'entraînement :
a) pendant le fonctionnement de traction complet lors de l'accélération et/ou en pente et/ou au démarrage et/ou
b) comme fonction de suralimentation pour combler ou compléter à court terme le couple du moteur à combustion du tracteur et/ou
c) pour augmenter l'effet de freinage dans les pentes, notamment en liaison avec la charge d'un accumulateur d'énergie (30) par récupération.

6. Utilisation d'un combiné de traction de véhicules routiers selon l'une des revendications 1 à 5, **caractérisée en ce que**
le combiné de traction (1) comprend un camion (2) pourvu d'un attelage de remorque comme tracteur comprenant un chariot à deux essieux (3) attelé et une semi-remorque (5) attelée à celui-ci (Train de type A à camion long),
l'essieu de chariot avant (8) est orientable et la direction peut être actionnée au moyen d'un timon (7), et
l'essieu de chariot arrière, éventuellement aussi les deux essieux de chariot, est conçu comme un module d'entraînement et parfois comme un essieu moteur (9) avec une technique d'entraînement commandable,
encore au moins un essieu de la semi-remorque (5) étant de préférence prévu en plus qui est conçu comme un module d'entraînement et parfois comme un essieu moteur (12).

7. Utilisation d'un combiné de traction de véhicules routiers selon l'une des revendications 1 à 6, **caractérisée en ce qu'**au moins une semi-remorque (16 ; 23) comporte un attelage de remorque arrière au moyen duquel la semi-remorque (23) peut être reliée à une autre semi-remorque (26) avec interposition d'un chariot (24) et/ou au moyen duquel la semi-remorque (16) peut être attelée à une remorque (19), l'au moins une semi-remorque et/ou l'au moins un chariot (22 ; 24) et/ou l'au moins une remorque (19) comportant au moins un module d'entraînement pourvu d'un essieu moteur temporaire (9 ; 25).

8. Utilisation d'un combiné de traction de véhicules routiers selon l'une des revendications 1 à 7, **caractérisée en ce qu'**un accumulateur d'énergie électrique (30) est disposé dans le module d'entraînement pour la récupération et la gestion de l'énergie.

9. Procédé de fonctionnement d'un combiné de traction de véhicules routiers dans des centres logistiques afin d'effectuer des manoeuvres individuelles sur des rampes de chargement, le combiné de traction de véhicules routiers comportant un tracteur commandable (2 ; 14 ; 21) équipé d'au moins un essieu mené (6 ; 15) et d'au moins un véhicule accouplé au tracteur (2 ; 14 ; 21), au moins un essieu (9 ; 12 ; 17 ; 25) du véhicule accouplé au tracteur (2 ; 14 ; 21) étant conçu comme module d'entraînement et parfois comme un essieu moteur, le module d'entraînement comportant une unité d'entraînement (28) qui peut être commandée automatiquement et activée pendant une durée limitée au moyen d'une unité de commande (29) en fonction de l'état de fonctionnement de roulement déterminé et des besoins d'entraînement déterminés du combiné de traction de véhicules routiers (1) de façon à commuter temporairement l'essieu d'un fonctionnement à essieu porteur dans un fonctionnement à essieu moteur,
l'unité d'entraînement (28) du module d'entraînement comportant au moins un moteur électrique (29) qui est disposé directement sur l'essieu moteur (9 ; 12 ; 17 ; 25) et l'alimentation électrique étant effectuée, conjointement avec une communication de signaux, par une liaison enfichable depuis le tracteur (2 ; 14 ; 21),
le module d'entraînement pouvant être activé automatiquement en fonction du fonctionnement de roulement à puissance variable, dans l'état de fonctionnement spécifié ou déterminé par communication avec le tracteur (2 ; 14 ; 21) et/ou par un système de capteurs du module d'entraînement, dans des centres logistiques afin d'effectuer des manoeuvres individuelles sur des rampes de chargement, ou pouvant être activé individuellement à la main, l'alimentation en énergie étant alors effectuée sans contact au moyen de boucles de charge situées dans le sol.
